Europäisches Patentamt

European Patent Office

Office européen des brevets

(11) Publication number: **0 282 793 B1**

# EUROPEAN PATENT SPECIFICATION

(45) Date of publication of patent specification: **08.01.92**   (51) Int. Cl.5: **B62D 25/18**

(21) Application number: **88102924.3**

(22) Date of filing: **26.02.88**

(54) **Industrial vehicle comprising mudguards shielding at least some of the vehicle wheels.**

(30) Priority: **17.03.87 IT 5314687 U**

(43) Date of publication of application:
**21.09.88 Bulletin 88/38**

(45) Publication of the grant of the patent:
**08.01.92 Bulletin 92/02**

(84) Designated Contracting States:
**DE ES FR GB SE**

(56) References cited:
**EP-A- 0 001 902**
**DE-A- 2 911 610**
**FR-A- 1 421 714**
**GB-A- 2 055 721**
**US-A- 3 473 825**

(73) Proprietor: **IVECO FIAT S.p.A.**
**Via Puglia 35**
**I-10156 Torino(IT)**

(72) Inventor: **Savio, Piero**
**Via Boito, 1**
**I-10040 Borgaretto(IT)**

(74) Representative: **Jorio, Paolo et al**
**STUDIO TORTA Società Semplice Via Viotti 9**
**I-10121 Torino(IT)**

Rank Xerox (UK) Business Services

## Description

This invention relates to an industrial vehicle comprising at least a mudguard shielding a corresponding vehicle wheel. In an industrial vehicle it is known to mount wheels of different dimensions (width and diameter) according to the type of vehicle application.

As current law requires the distance between each wheel and its mudguard to lie within predetermined minimum and maximum limiting values, mudguards of different dimensions must be provided in order to satisfy this law as required.

This results in considerable production and storage costs, as series of different sized mudguards must be designed, produced and stocked.

From US-A-3 473 825 a wheel flap is known which can be attached to a structure secured in a fixed position on the vehicle bed, said structure including upper brackets, lower extensions, intermediate brackets and cross bar, which are to be mutually assembled each time in different relative vertical positions to adapt the vertical position of the flap with respect to the road.

The object of the present invention is to provide a vehicle of the aforesaid type comprising mudguards, which is able to limit the aforesaid production and storage costs also for vehicles having wheels of different sizes.

Said object is attained by the industrial vehicle according to the invention, which comprises at least a mudguard shielding a corresponding wheel, a bracket extending from an upper portion of said mudguard and provided with a first plurality of connecting holes mutually distanced by identical distance, and support means interposed between said bracket and a vehicle body to enable said mudguard to be fixed in a position relative to said body, which is selectable among a range of predetermined relative positions, and is characterised in that said support means comprises a stiffening plate fixed to said body and provided with a second plurality of connecting holes mutually distanced by said identical distance, selected holes of said bracket and said plate being connected by corresponding bolts, said bracket and said plate being mutually arranged in such a way that by selecting the position of said range said mudguard can alter its distance radially from said corresponding wheel.

The present invention will be more apparent from the detailed description given hereinafter of a preferred embodiment thereof with particular reference to the accompanying drawings in which:

Figure 1 is a perspective view of the front part of the body of an industrial vehicle constructed in accordance with the present invention;

Figures 2 and 3 are side views of a portion of the body of Figure 1, in which two different mudguard fixing positions are shown;

Figures 4 and 5 are plan views of a portion of the body of Figure 1, in which two further different fixing positions for the same mudguard are shown; and

Figure 6 is a plan view to an enlarged scale of a detail of Figures 4 and 5 in two different assembly configurations, with some parts removed for clarity.

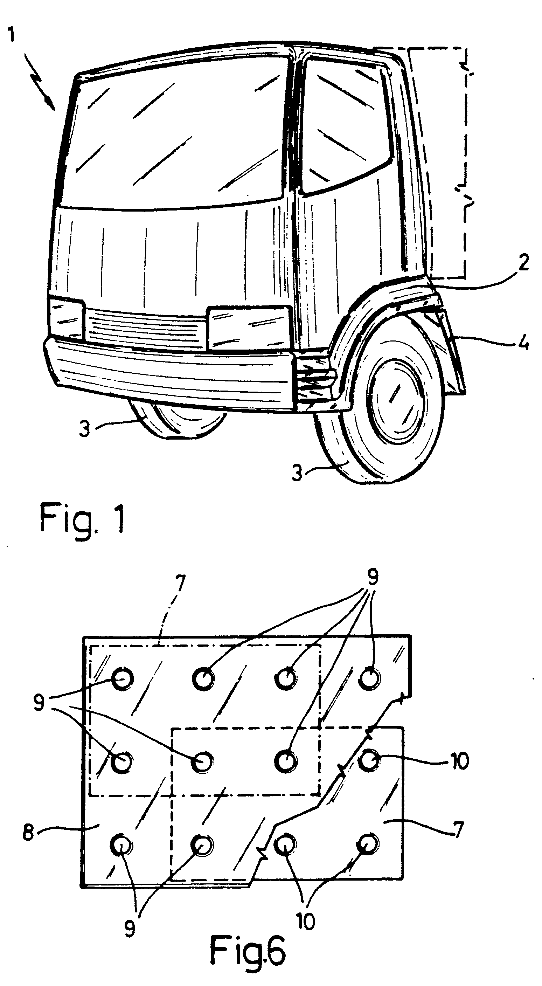

In Figure 1, the reference numeral 1 indicates overall an industrial vehicle constructed in accordance with the present invention.

The following parts of the vehicle 1 are essentially visible:
- the body 2 (the driver's cab in this specific case);
- two front wheels 3; and
- a mudguard 4 shielding one of said wheels 3 (the front left hand wheel in this specific case).

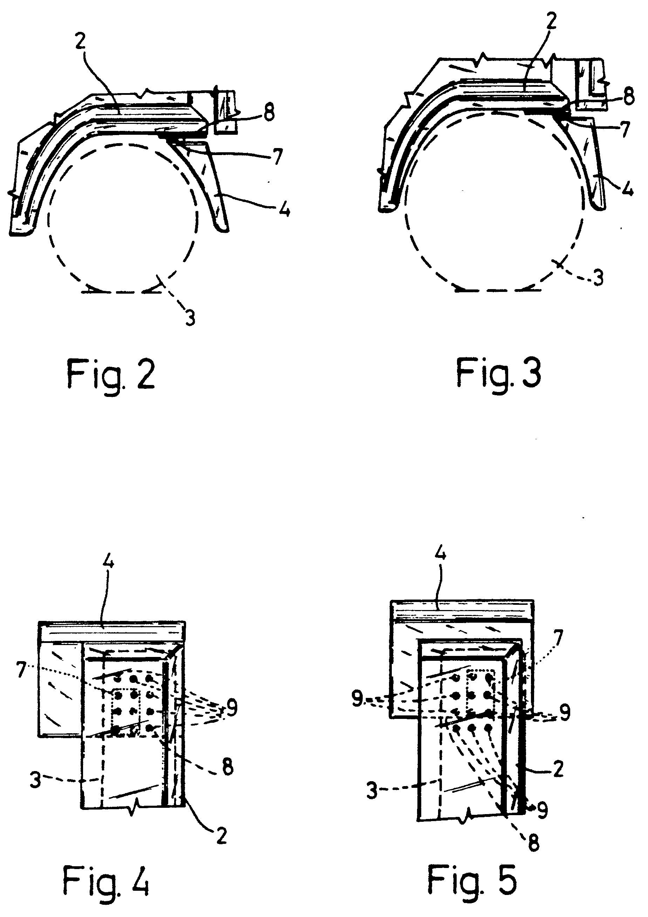

With reference to Figures 2, 3, 4, 5 and 6, the mudguard 4 is provided upperly with a bracket 7 substantially perpendicular thereto, and connected by bolts, not shown, to a stiffening plate 8 fixed substantially horizontally to the body 2 of the vehicle 1. According to the present invention and with particular reference to Figures 4, 5 and 6, the plate 8 is provided with a plurality of equidistant through holes 9 forming substantially a square grid. Correspondingly, the bracket 7 is also provided with through holes 10 (Figure 6) having the same distance between axes as the said holes 9.

In this manner it is possible to fix the mudguard 4 to the body 2 while selecting its position relative to the body itself (and thus relative to the wheel 3) from a range of predetermined relative positions shown in Figure 6.

For example, if the wheel 3 is of small diameter (Figure 2), the mudguard 4 can be mounted close to the wheel, whereas if a wheel of greater diameter is used (Figure 3) the mudguard 4 has merely to be fixed further rearwards. Analogous considerations apply if the width of the wheel 3 is small or large. In both the aforesaid cases (see Figures 4 and 5), the mudguard 4 can be correctly positioned by fixing the bracket 7 to the plate 8 in the most suitable relative position.

The advantages of the vehicle according to the present invention are apparent from an examination of its characteristics. In this respect, it is necessary to design, produce and store only one type of mudguard, as personalised assembly is now possible according to the dimensions of the wheels to be mounted. There is thus a reduction in design and production costs, and in storage space. Finally, it is apparent that modifications can be made to the vehicle 1 described heretofore but without leaving the scope of the present invention.

For example, the method of connecting the mudguard 4 to the body 2 can differ considerably from that described, provided that the principle is maintained of providing in the mudguard and/or in the body suitable support means which comprise connection means enabling the mudguard to be fixed to the body within a range of selectable predetermined relative positions.

## Claims

1. An industrial vehicle comprising at least a mudguard (4) shielding a corresponding vehicle wheel (3), a bracket (7) extending from an upper portion of said mudguard (4) and provided with a first plurality of connecting holes (10) mutually distanced by identical distance, and support means (8) interposed between said bracket (7) and a vehicle body (2) to enable said mudguard (4) to be fixed in a position relative to said body (2), which is selectable among a range of predetermined relative positions, characterised in that said support means comprises a stiffening plate (8) fixed to said body (2) and provided with a second plurality of connecting holes (9) mutually distanced by said identical distance, selected holes (10, 9) of said bracket (7) and said plate (8) being connected by corresponding bolts, said bracket (7) and said plate (8) being mutually arranged in such a way that by selecting the position of said range said mudguard (4) can alter its distance radially from said corresponding wheel (3).

2. A vehicle as claimed in claim 1, characterised in that said bracket (7) is secured to said upper portion of said mudguard (4) and extends substantially perpendicularly to said mudguard (4), said plate (8) being fixed to said body (2) in a substantially horizontal position.

3. A vehicle as claimed in claim 2, characterised, in that said pluralities of holes (10, 9) are arranged in said bracket (7) and in said plate (8) according to a substantially square grid, whereby said range of relative positions enable said mudguard (4) to be mounted in a variable position relative to said wheel (3) both radially and transversely.

## Revendications

1. Un véhicule industriel comprenant au moins un garde-boue (4) protégeant une roue correspondante (3) du véhicule, une console (7) s'étendant à partir d'une partie supérieure dudit garde-boue (4) et pourvue d'une première pluralité de trous de fixation (10) espacés entre eux d'une distance identique, et un moyen de support (8) interposé entre ladite console (7) et la caisse (2) d'un véhicule, pour permettre de fixer ledit garde-boue (4) dans une position par rapport à ladite caisse (2) pouvant être choisie parmi une gamme de positions relatives prédéterminées, caractérisé en ce que ledit moyen de support comprend une plaque de renfort (8) fixée sur ladite caisse (2) et pourvue d'une seconde pluralité de trous de fixation (9) espacés entre eux de ladite distance identique, les trous choisis (10, 9) de ladite console (7) et de ladite plaque de renfort (8) étant raccordés par des boulons correspondants, ladite console (7) et ladite plaque de renfort (8) étant agencées mutuellement de manière qu'en choisissant la position de ladite gamme, il est possible de modifier la distance radiale dudit garde-boue (4) par rapport à ladite roue correspondante (3).

2. Un véhicule selon la revendication 1, caractérisé en ce que ladite console (7) est fixée sur ladite partie supérieure dudit garde-boue (4) et s'étend sensiblement perpendiculairement audit garde-boue (4), ladite plaque de renfort (8) étant fixée sur ladite caisse (2) dans une position sensiblement horizontale.

3. Un véhicule selon la revendication 2, caractérisé en ce que lesdites pluralités de trous (10, 9) sont agencées dans ladite console (7) et dans ladite plaque de renfort (8) en fonction d'une grille sensiblement carrée, de manière que ladite gamme de positions relatives permette le montage dudit garde-boue (4) dans une position relative variable par rapport à ladite roue (3), tant radialement que transversalement.

## Patentansprüche

1. Gewerbliches Fahrzeug mit wenigstens einem Schmutzfänger (4), der ein entsprechendes Fahrzeugrad (3) abschirmt, einem Ansatz (7), der sich vom oberen Bereich des Schmutzfängers (4) erstreckt und mit einer ersten Vielzahl von Verbindungslöchern (10) versehen ist, die untereinander gleiche Abstände aufweisen, und einer Stutzeinrichtung (8) zwischen dem Ansatz (7) und dem Fahrzeugkörper (2), die es gestattet, den Schmutzfänger (4) in einer Position in bezug auf den Fahrzeugkörper (2) zu befestigen, die aus einem Bereich von vorbestimmten relativen Positionen auswählbar ist, dadurch **gekennzeichnet,** daß die Stützeinrichtung eine Versteifungsplatte (8) umfaßt, die an dem Fahrzeugkörper (2) befestigt ist und mit einer zweiten Vielzahl von Verbindungslöchern (9) versehen ist, die untereinander gleiche Abstände aufweisen, wobei ausgewählte Löcher (10, 9) des Ansatzes (7) und der Platte (8) durch entsprechende Bolzen verbunden sind, wobei der Ansatz (7) und die Platte (8) so in Bezug aufeinander angeordnet sind, daß durch Auswählen der Position des Bereichs der Schmutzfänger (4) seinen radialen Abstand von dem entsprechenden Rad (3) ändern kann.

2. Fahrzeug nach Anspruch 1, dadurch **gekennzeichnet,** daß der Ansatz (7) in dem oberen Bereich des Schmutzfängers (4) befestigt ist und sich im wesentlichen senkrecht zu dem Schmutzfänger (4) erstreckt, wobei die Platte (8) an dem Fahrzeugkörper (2) in einer im wesentlichen waagerechten Position befestigt ist.

3. Fahrzeug nach Anspruch 2, dadurch **gekennzeichnet,** daß die mehreren Löcher (10, 9) in dem Ansatz (7) und der Platte (8) in einem im wesentlichen quadratischen Raster angeordnet sind, so daß der Bereich der relativen Positionen die Möglichkeit bietet, den Schmutzfänger (4) radial und in Querrichtung in unterschiedlichen Positionen in bezug auf das Rad (3) zu befestigen.

Fig. 1

Fig.6

Fig. 2

Fig. 3

Fig. 4

Fig. 5